# DEMANDE DE BREVET EUROPEEN

(11) **EP 0 714 073 A1**
(43) Date de publication de la demande: **29.05.1996**
(21) Numéro de dépôt: 95402569.8
(22) Date de dépôt: 15.11.1995
(51) Int. Cl.: G06K 7/10

(54) **Borne de communication sans contact avec des objets portatifs**

(30) Priorité: 22.11.1994 FR 9413954
(71) Demandeur: INNOVATRON INDUSTRIES, Société Anonyme, F-75002 Paris (FR)
(72) Inventeur: Mardinian, Grégory, F-95160 Montmorency (FR); Wehowski, Frédéric, F-77220 Gretz Armainvilliers (FR)
(74) Mandataire: Dupuis-Latour, Dominique

(57) **Abrégé**

La borne comprend des moyens collecteurs d'onde (10) sensibles à la composante magnétique d'un champ électromagnétique, des moyens récepteurs (28, 30), coopérant avec les moyens collecteurs d'onde pour recevoir et amplifier des signaux recueillis par ce derniers et des moyens de contrôle, commandés par des données en provenance d'un objet portatif.

Selon l'invention, il est prévu : au moins deux collecteurs d'onde distincts, disposés au voisinage l'un de l'autre et séparés entre eux d'un intervalle prédéterminé, et des moyens discriminateurs (32, 34, 40), pour dériver, à partir des signaux recueillis par chacun des collecteurs d'onde au cours d'une même période donnée, un signal (42) indiquant celui des collecteurs d'onde ayant reçu le signal présentant l'amplitude la plus élevée, ce signal étant transmis aux moyens de contrôle avec un signal (38) représentatif des données recueillies par les moyens collecteurs d'onde.

## Description

L'invention concerne la communication sans contact entre une borne et un objet portatif.

De tels systèmes d'échange de données sans contact sont bien connus et par exemple décrits dans le EP-A-0 565 469, au nom de la demanderesse, auquel on pourra se référer pour plus de précisions concernant notamment la gestion des diverses informations échangées entre un objet portatif (ci-après appelé simplement "badge") et terminal ainsi que les divers protocoles de communication utilisés.

Parmi les applications de cette technique, on trouve, de façon non limitative, le contrôle d'accès et le télépéage, par exemple pour l'accès et le péage des transports en commun.

Dans ce dernier exemple, chaque usager est muni d'un objet portatif du type "carte sans contact" ou "badge sans contact", qui est un objet susceptible d'échanger des informations (par lecture, et éventuellement écriture, d'une mémoire de données incorporée à l'objet) avec la borne, en approchant le badge de cette dernière de manière à permettre un couplage électromagnétique, non galvanique.

L'invention vise le cas particulier où l'échange d'informations consécutif à ce couplage est opéré en faisant varier un champ magnétique produit par une bobine d'induction. Dans une telle technologie d'échange d'informations par voie inductive, du fait que le transfert de données est opéré par le champ magnétique, la zone dans laquelle il peut y avoir échange d'informations est très bien localisée. Cette caractéristique, ainsi que le coût très bas de la fonction communication, constituent les principaux intérêts de cette technique qui la font préférer au couplage radioélectrique, beaucoup plus coûteux et plus sensible aux variations de portée.

Il peut être souhaitable, dans certains cas, de prévoir un système de contrôle d'accès ou de télépéage dans lequel les badges pourront être détectés aussi bien d'un côté que de l'autre de la bobine de la borne. Ce cas se présente par exemple lorsque la bobine est disposée verticalement, montée sur un pilier de part et d'autre duquel les usagers peuvent passer.

Dans une telle configuration, la borne ne peut pas déterminer si le porteur du badge se trouve d'un côté ou bien de l'autre de la boucle, ce qui pose des problèmes ergonomiques car il faut empêcher à deux utilisateurs de présenter leur badge simultanément ou quasi-simultanément à gauche et à droite. En effet, dans ce cas, la reconnaissance de l'un des utilisateurs (celui avec lequel le protocole d'échange de données est entamé en premier) peut produire un signal de validation, par exemple l'allumage d'une lampe, qui risque d'être interprété par l'autre utilisateur comme lui étant destiné, alors que son badge est en réalité trop loin de la boucle pour pouvoir communiquer avec la borne.

Une première solution technique pour réaliser une borne permettant de déterminer de quel côté se trouve l'usager avec lequel a été initiée la communication consiste à accoler deux antennes séparées par une plaque métallique, afin de séparer les diagrammes de rayonnement respectifs des deux boucles en deux demi-espaces distincts. Cependant, dans le cas particulier, auquel s'adresse l'invention, où l'échange d'informations se fait en faisant varier un champ magnétique, la présence d'une plaque métallique a pour effet de perturber considérablement le diagramme de champ et de réduire fortement la portée de la boucle à la différence d'un échange d'informations par voie radioélectrique, où la présence d'une plaque métallique jouerait un rôle de réflecteur en modifiant seulement la directivité de l'antenne.

Cette technique n'étant pas satisfaisante, l'invention propose une autre technique présentant l'avantage de permettre une discrimination du côté où se trouve le badge avec lequel la communication a été établie, sans perte de portée par rapport à une boucle d'un système traditionnel.

À cet effet, l'invention propose une borne, du type connu comprenant des moyens collecteurs d'onde sensibles à la composante magnétique d'un champ électromagnétique, des moyens récepteurs, coopérant avec les moyens collecteurs d'onde pour recevoir et amplifier des signaux recueillis par ce derniers et des moyens de contrôle, commandés par des données en provenance d'un objet portatif, caractérisée en ce qu'elle comprend : au moins deux collecteurs d'onde distincts, disposés au voisinage l'un de l'autre et séparés entre eux d'un intervalle prédéterminé ; et des moyens discriminateurs, pour dériver, à partir des signaux recueillis par chacun des collecteurs d'onde au cours d'une même période donnée, un signal indiquant celui des collecteurs d'onde ayant reçu le signal présentant l'amplitude la plus élevée, ce signal étant transmis aux moyens de contrôle avec un signal représentatif des données recueillies par les moyens collecteurs d'onde.

Dans une forme de réalisation avantageuse, les moyens discriminateurs comprennent des moyens sommateurs, pour produire un signal représentatif de la somme des amplitudes desdits signaux respectifs recueillis par chacun des collecteurs d'onde au cours d'une période donnée, et des moyens soustracteurs, pour produire un signal représentatif de la différence des amplitudes de ces mêmes signaux respectifs recueillis au cours de cette même période, les moyens discriminateurs dérivant ledit signal indiquant celui des collecteurs d'onde ayant reçu le signal présentant l'amplitude la plus élevée à partir des signaux produits simultanément par les moyens sommateurs et par les moyens soustracteurs.

D'autres caractéristiques et avantages de l'invention apparaîtront à la lecture de la description détaillée ci-dessous, faite en référence aux dessins annexés.

La figure 1 est une vue perspective schématique montrant la géométrie de la double boucle de l'invention.

La figure 2 est une vue de dessus de la double boucle de la figure 1, expliquant les différentes positions possibles de badges simultanément présents au voisinage de cette double boucle.

La figure 3 est un schéma par blocs du circuit électronique assurant la réception et la discrimination des signaux captés par la double boucle des figures 1 et 2.

Les figures 4 à 6 sont des chronogrammes montrant les niveaux des signaux correspondant aux différentes configurations de badges schématisés figure 2.

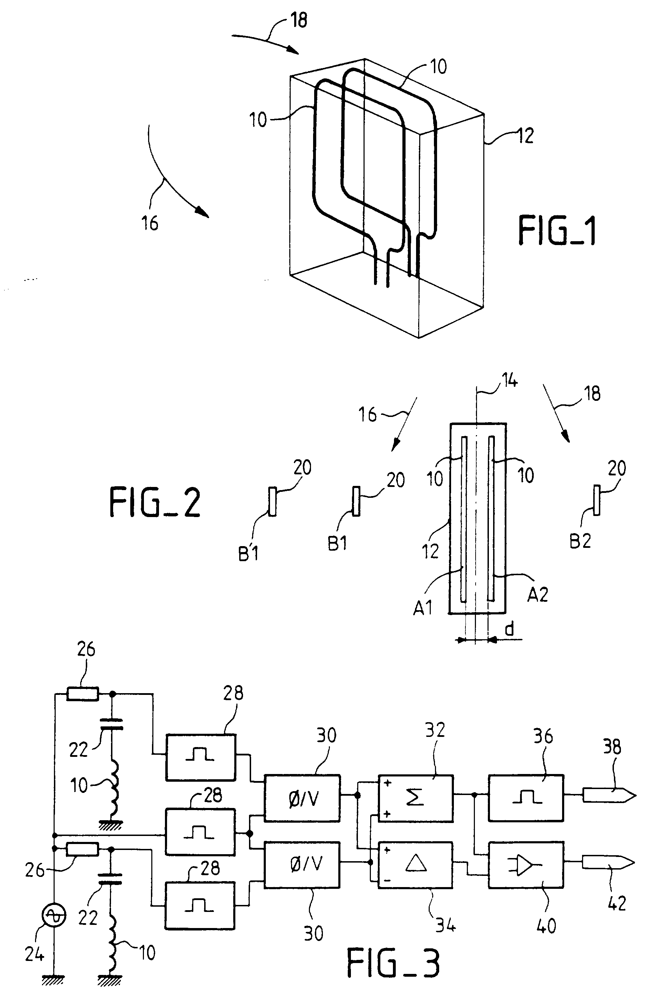

Sur la figure 1, on a représenté le système collecteur d'onde de la présente invention, qui est constitué de deux collecteurs d'onde distincts 10 tels que des boucles (à spire unique) ou des bobinages sensibles au champ magnétique régnant à leur voisinage.

Ces collecteurs d'onde servent également à l'émission éventuelle de signaux en direction des badges, mais cet aspect ne sera pas décrit car il ne concerne pas l'invention ; de plus, l'invention peut être mise en oeuvre avec des bornes n'assurant qu'une fonction de lecture, par exemple dans les systèmes de contrôle d'accès où l'on se contente de reconnaître et authentifier un utilisateur grâce au signal produit par le badge qu'il approche de la borne.

Les deux boucles 10 sont de dimensions semblables, planes, et disposées au voisinage l'une de l'autre en étant séparées d'un intervalle prédéterminé d (figure 2).

L'ensemble formé par les deux boucles peut être enfermé dans un carter amagnétique 12, par exemple fixé sur une colonne ou un pied, sur le montant central d'une entrée d'autobus, etc., de manière que le plan des bobines 10 soit sensiblement vertical et définisse deux passages possibles de part et d'autre d'un plan médian 14 (figure 2), ces deux passages possibles étant symbolisés par les flèches 16 et 18, à droite ou à gauche du carter 12 de la borne.

Le but de l'invention consiste, en présence de plusieurs badges 20 se trouvant simultanément dans la portée de la double boucle, de déterminer si le premier badge avec lequel est établie une communication se trouve à droite ou à gauche de la double boucle de la borne, et de pouvoir ainsi actionner une commande (signal lumineux, ouverture d'un portillon, etc.) à destination de celui des usagers avec lequel la communication est établie, et non d'un usager situé de l'autre côté. Ainsi, si la borne commande le déblocage d'un portillon, il s'agit de débloquer le portillon de droite si l'usager avec lequel la communication a été établie est celui qui s'est présenté à droite, et non l'inverse, et de même pour le portillon de gauche.

La figure 3 montre schématiquement les circuits de détection et de discrimination de la borne.

Les deux boucles 10 constituent chacune un élément inductif associé à une élément capacitif 22 alimenté par un courant alternatif produit par une source 24 via une résistance 26. Les signaux respectifs correspondants sont mis en forme par des circuits 28 et appliqués à un montage différentiel à deux convertisseurs phase-tension 30.

Avec un tel circuit, de manière en elle-même connue, lorsqu'un badge entre dans le domaine d'action de la borne, un couplage inductif avec cette dernière s'établit et le badge, qui contient un circuit résonant, modifie l'impédance de ce dernier entre deux états : résonant ou non résonant. Du côté de la borne, cette modulation entraîne une variation du déphasage entre les signaux appliqués aux entrées des convertisseurs 30, et cette variation de déphasage, qui est d'autant plus grande que le badge est situé proche de la boucle, est transformée après démodulation en un signal d'amplitude variable en sortie des convertisseurs 30.

Dans le protocole de communication utilisé, c'est la borne qui pilote le dialogue avec le badge. Il est donc nécessaire que, dans une première phase, elle choisisse le badge avec lequel elle va échanger les données. Les protocoles connus, par exemple ceux décrits dans le EP-A-0 565 469 précité, permettent d'éviter tout conflit ou collision et de communiquer successivement avec différents badges même si ceux-ci sont présents simultanément dans le champ d'action de la borne, cette dernière ne dialoguant à un instant donné qu'avec un seul des badges.

Le lecteur procède alors à une reconnaissance et une authentification du badge et, en cas de conformité, procède éventuellement à une décrémentation d'une unité de compte dans la mémoire du badge et exécute une action appropriée, par exemple le déblocage d'un portillon d'accès ou la commande d'un signal lumineux indiquant à l'usager qu'il est autorisé à passer.

Toutefois, dans la configuration particulière où un usager peut se trouver aussi bien à droite qu'à gauche de la boucle, il est nécessaire de savoir celui des deux portillons ou celui des deux signaux lumineux, à droite ou à gauche, qu'il y aura lieu de commander.

Pour permettre cette discrimination, les signaux issus des deux convertisseurs 30 sont appliqués, d'une part, à un circuit sommateur 32 produisant un signal somme et, d'autre part, à un circuit soustracteur 34 produisant un signal différence. Le signal somme, après mise en forme par un circuit 36, donne un signal 38 représentatif des données transmises par le badge à la borne, données qui seront utilisés, de manière en elle-même connue, pour contrôle, authentification, etc.

Le signal de discrimination est, quant à lui, produit par un circuit comparateur 40 recevant sur ses entrées les signaux somme et différence issus des circuits 32 et 34, respectivement, et produisant le signal de discrimination 42 (indication binaire "droite" ou "gauche") conformément aux principes que l'on va maintenant décrire plus en détail, à l'aide des figures 2 et 4 à 6.

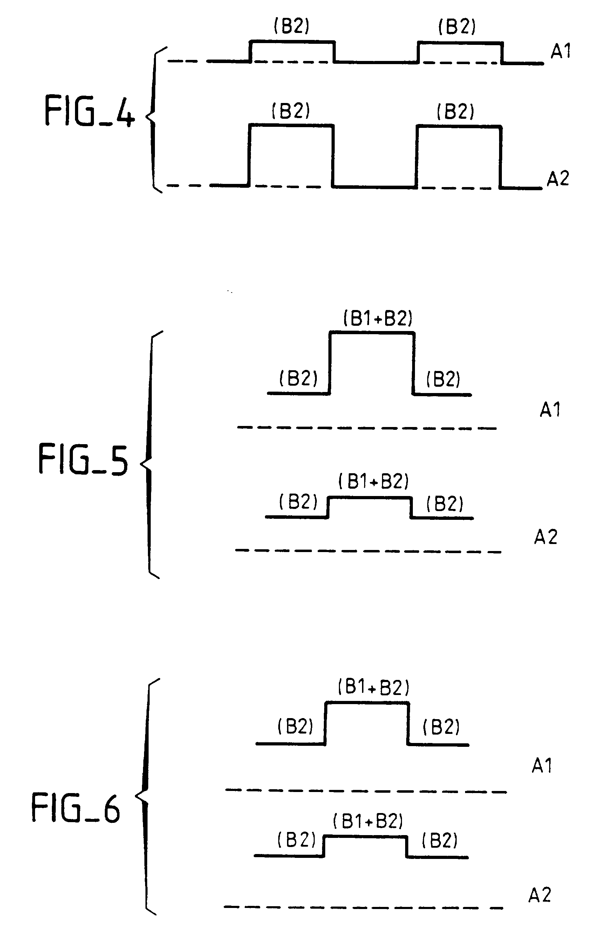

Si l'on appelle A1 et A2 les deux boucles, droite et gauche, supposons que l'on soit en présence d'un seul badge situé en B2, c'est-à-dire du côté de la boucle A2. Les signaux produits en sortie des convertisseurs 30 seront alors pour chacune des boucles ceux représentés figure 4, étant entendu que le niveau haut produit par un badge correspond à un état résonant de celui-ci et un niveau bas, à un état non résonant (le badge étant toujours résonant en dehors des périodes de transmission). Comme on peut le voir, sur la boucle A2, c'est-à-dire celle située du côté où se trouve le badge, l'amplitude du signal obtenu est plus élevée que celle du signal de la boucle A1, située plus loin (les deux antennes étant séparées par l'intervalle d).

Considérons maintenant le cas où deux badges sont présents simultanément en B1 et B2, c'est-à-dire approximativement à équidistance des deux boucles, mais de part et d'autre de celles-ci ; supposons encore que la communication ait été initialement établie avec le badge situé en B1, celui situé en B2 étant présent mais n'effectuant pas de transmission, donc étant en un état résonant en permanence. L'allure des signaux recueillis par A1 et A2 sera alors celle illustrée sur la figure 5, où l'on voit que l'amplitude maximale reçue du côté de la boucle A1 est encore supérieure à celle reçue du côté de la boucle A2, malgré la présence du badge en B2, qui se manifeste seulement par un décalage continu du niveau par rapport à la ligne de base (représentée en tiretés sur les figures et correspondant à l'absence complète de badge dans la zone d'action de la borne).

Le cas de la figure 6 et semblable à celui de la figure 5, sauf que les badges sont situés en B2 et B'1, B'1 étant le badge échangeant les données avec la borne, B2 étant présent dans le champ de la borne mais sans échanger de données avec elle et B'1 étant situé en une position plus éloignée de la borne que la position B1 du cas précédent. Dans cette situation, on observe encore une différence du niveau maximal entre les signaux reçus par les deux boucles, permettant de déterminer quelle est la boucle la plus proche du badge avec lequel la communication est établie, à savoir la boucle A1 dans le cas présent. On notera simplement que l'intervalle d entre les deux boucles est choisi, compte tenu de la portée maximale du système, pour que cette différence d'amplitude soit toujours observable et permette donc la discrimination dans tous les cas de figure.

## Revendications

1. Une borne de communication sans contact avec des objets portatifs, du type comprenant :
- des moyens collecteurs d'onde (10) sensibles à la composante magnétique d'un champ électromagnétique,
- des moyens récepteurs (28, 30), coopérant avec les moyens collecteurs d'onde pour recevoir et amplifier des signaux recueillis par ce derniers, et
- des moyens de contrôle, commandés par des données en provenance d'un objet portatif,
borne caractérisée en ce qu'elle comprend :
- au moins deux collecteurs d'onde distincts, de dimensions semblables, plans et disposés au voisinage l'un de l'autre et séparés entre eux d'un intervalle prédéterminé, ces collecteurs d'onde étant sensiblement verticaux et définissant deux passages possibles de part et d'autre d'un plan médian, et
- des moyens (32, 34, 40) discriminateurs du côté du plan médian où se situe un objet portatif émettant un signal, ces moyens dérivant, à partir des signaux recueillis par chacun des collecteurs d'onde au cours d'une même période donnée, un signal (42) indiquant celui des collecteurs d'onde ayant reçu le signal présentant l'amplitude la plus élevée, ce signal étant transmis aux moyens de contrôle avec un signal (38) représentatif des données recueillies par les moyens collecteurs d'onde.

2. La borne de communication de la revendication 1, dans laquelle la borne comporte en outre des moyens émetteurs, ces moyens émetteurs coopérant avec lesdits collecteurs d'onde, ces derniers servant à la fois à l'émission et à la réception de signaux électromagnétiques.

3. La borne de communication de la revendication 1, dans laquelle les moyens discriminateurs comprennent :
- des moyens sommateurs (32), pour produire un signal représentatif de la somme des amplitudes desdits signaux respectifs recueillis par chacun des collecteurs d'onde au cours d'une période donnée, et
- des moyens soustracteurs (34), pour produire un signal représentatif de la différence des amplitudes de ces mêmes signaux respectifs recueillis au cours de cette même période,
les moyens discriminateurs dérivant ledit signal indiquant celui des collecteurs d'onde ayant reçu le signal présentant l'amplitude la plus élevée à partir des signaux produits simultanément par les moyens sommateurs et par les moyens soustracteurs.
